# EUROPÄISCHE PATENTSCHRIFT

(11) **EP 4 279 683 B1**
(45) Veröffentlichungstag und Bekanntmachung des Hinweises auf die Patenterteilung: **06.05.2026**
(21) Anmeldenummer: 22174629.0
(22) Anmeldetag: 20.05.2022
(51) Int. Cl.: E04D 13/14, F24S 25/61, H02S 20/24, G01L 1/00

(54) **VORRICHTUNG ZUM BEFESTIGEN VON MINDESTENS EINEM OBJEKT AUF EINER DACHFLÄCHE**
DEVICE FOR FIXING AT LEAST ONE OBJECT ON A ROOF SURFACE
DISPOSITIF DE FIXATION D'AU MOINS UN OBJET SUR UNE SURFACE DE TOIT

(43) Veröffentlichungstag der Anmeldung: 22.11.2023
(73) Patentinhaber: ABS Safety GmbH, 47623 Kevelaer (DE); Below0 GmbH, 47623 Kevelaer (DE)
(72) Erfinder: Borst, David, 04103 Leipzig (DE); Beckers, Stefan, 47652 Weeze (DE); Pastuska, Maurice, 47623 Kevelaer (DE)
(74) Vertreter: Seemann & Partner Patentanwälte mbB

(56) Entgegenhaltungen:
- WO-A1-2012/045372
- DE-A1- 102011 000 867
- US-A1- 2012 138 208

## Beschreibung

Die Erfindung betrifft eine Vorrichtung zum Befestigen von mindestens einem Objekt auf einer Dachfläche, insbesondere einem Flachdach, eines Gebäudes.

Ferner betrifft die Erfindung eine Anordnung von mindestens einer Vorrichtung zum Befestigen von mindestens einem Objekt auf einer Dachfläche, insbesondere einem Flachdach, eines Gebäudes.

Ferner betrifft die Erfindung ein Verfahren zum Befestigen von mindestens einem Objekt an einer Dachfläche, insbesondere einem Flachdach, eines Gebäudes.

Außerdem betrifft die Erfindung eine Verwendung der Vorrichtung zum Befestigen von mindestens einem Objekt auf einer Dachfläche, insbesondere einem Flachdach, eines Gebäudes.

Es ist bekannt, dass Dächer von modernen Gebäuden u.a. hauptsächlich den Zweck erfüllen, die Gebäude vor Wind und Wetter zu schützen, wozu die Dächer abgedichtet sind oder werden. Bei Flachdächern erfolgt dies beispielsweise über Bitumen- oder PVC-Bahnen. Darüber hinaus werden auf Dächern technische Anlagen des Gebäudes installiert, wie beispielsweise Klima- und Lüftungsanlagen, Photovoltaik- und thermische Solaranlagen oder Blitzschutz- und Antennensysteme. Weiterhin sind Wartungspfade abzusichern, zum Beispiel über Absturzsicherungen.

Solche Dachaufbauten werden auf gewerblich genutzten Immobilien betrieben, beispielsweise, aber nicht ausschließlich, auf Lagerhallen, Logistikzentren, Produktionsstätten, Sporthallen oder Veranstaltungshallen. Gleichermaßen denkbar sind auch Dachflächen von Gebäuden privater Nutzung, wie Wohnhäuser, Wohnanlagen oder Garagen. Insbesondere eignen sich Flachdächer für die Nutzung technischer Anlagen.

Üblicherweise werden Dachaufbauten auf Flachdächern mittels Dachdurchdringung befestigt, wobei zur Verankerung in die Oberflächenbeläge und die Dachkonstruktion durchbohrt wird. Soll auf einem bestehenden Dach eine technische Anlage, wie zum Beispiel Solarpanels, nachgerüstet oder aufgestellt werden, ist häufig die unterliegende Dachkonstruktion unbekannt. Hierzu werden in einem solchen Fall Versuchsbohrungen durchgeführt, um auf die Dachunterkonstruktion zu schließen, zum Beispiel die Position der Dachträger, wobei Bohrlöcher im Dachbelag und der Dachunterkonstruktion entstehen.

DE 10 2011 000 867 A1 betrifft ein Trägersystem zur Befestigung von Solarmodulen sowie ein Montageverfahren zur Montage eines Trägersystems.

US 2012/138208 A1 betrifft Systeme und Verfahren zum Befestigen von Objekten an Polymermembranen. Die Polymermembranen werden beispielsweise zur Abdeckung eines Dachs verwendet.

WO 2012/045372 A1 zeigt eine Vorrichtung, die in einem wasserdichten System, wie beispielsweise einem Dach, einem Teich oder einem Schwimmbecken verwendet wird.

Ausgehend von diesem Stand der Technik besteht eine Aufgabe der Erfindung darin, Objekte stabil, einfach und flexibel an Dachflächen zu befestigen, wobei der konstruktive Aufwand hierfür möglichst gering gehalten werden soll.

Die Aufgabe wird gelöst durch eine Vorrichtung zum Befestigen von mindestens einem Objekt auf einer Dachfläche, insbesondere einem Flachdach, eines Gebäudes, wobei die Vorrichtung eine Verankerungsplatte aufweist, wobei die Verankerungsplatte auf der Dachfläche angeordnet oder anordbar ist, wobei die Verankerungsplatte eine der Dachfläche zugewandte Unterseite und eine der Dachfläche abgewandte Oberseite aufweist, wobei die Unterseite der Verankerungsplatte als Kontaktfläche zur Dachfläche ausgebildet ist, und wobei die Verankerungsplatte eine Grundplatte und einen auf der der Dachfläche abgewandten Seite der Grundplatte angeordneten Deckschichtkörper aufweist, wobei die Grundplatte eine höhere Steifigkeit als der Deckschichtkörper aufweist, und wobei die Verankerungsplatte mindestens eine Verbindungsvorrichtung für das auf der Dachfläche zu befestigende oder befestigte Objekt aufweist, wobei die mindestens eine Verbindungsvorrichtung mit der Grundplatte verbunden ist und der Deckschichtkörper von der mindestens einen Verbindungsvorrichtung durchdrungen ist und die mindestens eine Verbindungsvorrichtung von der Oberseite der Verankerungsplatte zugänglich ist, wobei die Grundplatte zur Verbindung mit der oberseitigen Dachfläche mit einer Masse, wie z.B. Bitumen, vergossen ist, wodurch der Deckschichtkörper der Verankerungsplatte aus der gegossenen Masse ausgebildet ist.

Der Grundgedanke der Erfindung beruht darauf, eine fest und sicher am Dach verankerte Verankerungsplatte für ein auf der Dachfläche angeordnetes oder anzuordnendes Objekt zur Verfügung zu stellen, auf oder an der unterschiedliche Objekte, welche beispielsweise unterschiedliche Maße und/oder unterschiedliches Gewicht aufweisen, austauschbar befestigt werden können. Erfindungsgemäß wird am oder auf dem Dach eine Vorrichtung zum Befestigen von mindestens einem Objekt angebracht, ohne die Dachabdeckung zu durchdringen bzw. durchbohren zu müssen. Anschließend können an der Verankerungsplatte die befestigten Aufbauten (Objekte) sehr einfach ausgetauscht werden, da nur die Verbindung mit der Verbindungsvorrichtung gelöst und mit dem anderen Objekt wieder verbunden werden muss. So kann beispielsweise eine Photovoltaik-Anlage ausgetauscht werden oder eine Klimaanlage o.ä. auf einem Dach installiert werden, ohne Bohrungen am Dach auszuführen.

Ein weiterer Vorteil der Erfindung besteht darin, dass durch die große Auflagefläche der Verankerungsplatte auf der Dachfläche eine sehr stabile Verbindung zwischen Dachfläche und Verankerungsplatte ausgebildet wird. Mittels der Verbindungsvorrichtung können die zu befestigenden Objekte sehr stabil an der Verankerungsplatte und damit auf dem Dach befestigt werden. Daraus ergibt sich eine stabile Verbindung von Dach zu dem Objekt bzw. den Objekten.

Vorteilhaft ist durch die Erfindung zudem, dass zu befestigende Objekte flexibel ausgetauscht oder auf dem Dach umgesetzt werden können. Durch die Installation einer oder mehrerer erfindungsgemäßen Vorrichtungen zum Befestigen wird eine Anzahl von möglichen Verbindungsvorrichtungen zur Verfügung gestellt, die flexibel genutzt werden können, um die jeweiligen Anforderungen der aufgestellten oder aufzustellenden Objekte zu erfüllen.

Ein weiterer Vorteil der Erfindung besteht darin, dass mittels der erfindungsgemäßen Vorrichtung mindestens ein Objekt einfach und kostengünstig auf oder an einem Dach befestigbar ist. Nach der einmaligen Installation einer Vorrichtung zum Befestigen sind keine Wartungsmaßnahmen durchzuführen.

Die Vorrichtung ist in ihren Abmessungen, einschließlich den Abmessungen der Verankerungsplatte, an ihren Einsatzort und Einsatzzweck angepasst, wobei die Vorrichtung insbesondere angepasst ist an äußere Bedingungen, wie zum Beispiel Klima- und Wetterbedingungen, sowie an Eigenschaften des zu befestigenden Objekts. Die äußeren Bedingungen können beispielsweise sein: die nach der Klimazone erwartbare Windlast, die nach der Klimazone erwartbare Schneelast, die (meteorologisch) vorhergesagte Windlast, die (meteorologisch) vorhergesagte Schneelast, die aktuelle Windlast, die aktuelle Schneelast, übliche Außentemperaturen und/oder andere prognostizierte Zuglasten und/oder Drucklasten. Die Eigenschaften des Objekts sind beispielsweise Maße, Form, einschließlich Windwiderstand, und/oder Masse etc.

Die Verankerungsplatte ist auf der Dachfläche angeordnet oder anordbar. In möglichen Ausführungsformen ist die Verankerungsplatte oder ist die Grundplatte mittels Bitumen oder mindestens einem bitumenhaltigen Bindemittel oder mindestens einem Flüssigkunststoff mit der oberseitigen Dachfläche bzw. dem Dach verbindbar oder verbunden. Dabei ist es im Rahmen der Erfindung vorgesehen, dass die Vorrichtung mit einer Masse, wie z.B. Bitumen, vergossen ist oder wird, wodurch die Vorrichtung bzw. die Verankerungsplatte von der Masse bzw. Bitumenmasse umgeben ist. Erfindungsgemäß ist vorgesehen, dass die Grundplatte mit einer Masse, wie z.B. Bitumen, vergossen ist, wodurch der Deckschichtkörper der Verankerungsplatte aus der gegossenen Masse ausgebildet ist. In einer anderen Ausführungsform, die nicht Teil der Erfindung ist, ist die Verankerungsplatte oder die Grundplatte mit der Dachfläche verschweißt. In einer weiteren Ausführungsform, die nicht Teil der Erfindung ist, sind lösbare Verbindungen zur Befestigung der Verankerungsplatte auf der Dachfläche vorgesehen, insbesondere Verschrauben oder Verrasten mit entsprechenden dachseitigen Gegenstücken.

Die Dachfläche eines Gebäudes ist insbesondere ein Flachdach eines Gebäudes. Die Verankerungsplatte ist vorzugsweise auf horizontalen Dachflächen angeordnet. In weiteren Ausführungsformen ist die Verankerungsplatte an vertikalen Dachflächen oder Dachflächen, die einen Neigungswinkel gegenüber einer Horizontalen aufweisen, angeordnet.

Die Unterseite der Verankerungsplatte ist als Kontaktfläche zur Dachfläche ausgebildet, so dass die Verankerungsplatte unmittelbar oder mittelbar an der Dachfläche angeordnet ist. Dabei ist sie vorteilhafterweise als Kontaktfläche ausgebildet.

Ein Bestandteil der Vorrichtung ist mindestens eine Verbindungsvorrichtung für das auf der Dachfläche zu befestigende oder befestigte Objekt. Vorteilhafterweise sind auf einer Vorrichtung mehr als eine Verbindungsvorrichtung vorgesehen. Vorteilhafterweise sind mehrere Verbindungsvorrichtungen vorgesehen. Vorteilhafterweise weist eine Vorrichtung in einer Ausgestaltung unterschiedliche Verbindungsvorrichtungen auf der Verankerungsplatte auf. Beispielsweise können in einer Vorrichtung mehrere unterschiedliche Verbindungsvorrichtungen zum Befestigen von unterschiedlichen zu befestigenden Objekten vorgesehen sein.

Vorzugsweise zeichnet sich die Vorrichtung dadurch aus, dass die Grundplatte aus Metall, insbesondere Stahl, insbesondere Edelstahl, besteht und/oder eine Dicke von 0,5 bis 5 mm, insbesondere von 1 bis 3 mm, aufweist. Eine metallische Grundplatte bewirkt eine hohe Stabilität und sichere Verbindung mit der mindestens einen Verbindungsvorrichtung. In bevorzugten Ausführungsformen besteht die Grundplatte zum Beispiel aus Aluminium oder Karbon oder Kunststoff.

Eine bevorzugte Ausführungsform der Vorrichtung zeichnet sich ferner dadurch aus, dass der Deckschichtkörper aus Bitumen und/oder eine Dicke von 1 bis 10 mm, insbesondere von 3 bis 8 mm, insbesondere 4 bis 6 mm, aufweist. Andere Ausführungsformen , die nicht Teil der Erfindung sind, zeichnen sich dadurch aus, dass der Deckschichtkörper aus Metall oder Stahl oder Edelstahl oder Aluminium oder Karbon oder PVC oder Kunststoff besteht. In einer weiteren nicht erfindungsgemäßen Ausführungsform ist der Deckschichtkörper als Folie ausgebildet. Erfindungsgemäß weist die Grundplatte eine höhere Steifigkeit als der Deckschichtkörper auf. Der Deckschichtkörper ist in einer Ausführungsform flexibel und/oder elastisch ausgebildet und in einer anderen Ausführungsform starr ausgebildet. Die bevorzugte Dicke des Deckschichtkörpers stellt einen zuverlässigen Schutz für die darunterliegende Grundplatte gegen Umwelteinflüsse sicher. Vorteilhafterweise ist der Deckschichtkörper aus einem Material gefertigt, welches sich um die den Deckschichtkörper durchdringenden Verbindungsvorrichtungen fügt, so dass nahe der Verbindungsvorrichtungen die Grundplatte vor Feuchtigkeit geschützt ist.

Vorteilhafterweise sind die Grundplatte und der Deckschichtkörper ohne Abstand, d.h. direkt bzw. unmittelbar, miteinander verbunden. Nicht erfindungsgemäß sind beispielhaft Grundplatte und Deckschichtkörper bevorzugterweise verklebt mittels Bindemittel, beispielsweise PVC, Bitumen oder Flüssigkunststoff oder verschraubt oder vernietet oder verschweißt. In einer erfindungsgemäßen Ausführung besteht die Grundplatte aus mehreren Teilgrundplatten und/oder besteht der Deckschichtkörper aus mehreren Teildeckschichtkörpern.

Im Rahmen der Erfindung ist in einem Aspekt vorgesehen, dass die Grundplatte und der Deckschichtkörper deckungsgleich sind, d.h. Grundplatte und Deckschichtkörper weisen die gleiche Fläche auf. In einer weiteren Ausführungsform weist der Deckschichtkörper eine Fläche auf, die von der Fläche der Grundplatte verschieden ist. Insbesondere weist in einer Ausführungsform der Deckschichtkörper eine größere Fläche als die Grundplatte auf.

Zur Gestaltung der mindestens einen Verbindungsvorrichtung ist vorteilhafterweise vorgesehen, dass die mindestens eine Verbindungsvorrichtung als ein Gewinde, insbesondere als ein Gewindebolzen mit Außengewinde oder als eine Gewindemuffe mit Innengewinde, oder eine Stiftverbindungsvorrichtung oder eine Rastvorrichtung oder eine Schnappvorrichtung oder ein Verbindungsbeschlag oder ein Haken ausgebildet ist. Vorteilhafterweise ist die Verbindungsvorrichtung an die äußeren, beispielsweise meteorologischen, Bedingungen und an das zu befestigende Objektangepasst ausgebildet. In einer bevorzugten Ausgestaltung ist mindestens eine Verbindungsvorrichtung mit einem Gewinde eines vorbestimmten Gewindetyps, einer vorbestimmten Gewindesteigung, einem vorbestimmten Gewinde- und Schraubenmaterial, einer vorbestimmten Größe und einer vorbestimmten Länge spezifiziert. Vorteilhafterweise sind die vorbestimmten Eigenschaften des Gewindes an die zu befestigenden Objekte, zum Beispiel deren Massen bzw. Gewichte, angepasst.

Eine Vorrichtung weist vorzugsweise mindestens eine Verbindungsvorrichtung auf, wobei in einer bevorzugten Ausgestaltung mehrere Verbindungsvorrichtungen vorgesehen sind, welche auch unterschiedlich gestaltet sein können. Beispielsweise ist bei einer Vorrichtung mit fünf Verbindungsvorrichtungen eine Verbindungsvorrichtung mit einer Rastvorrichtung, eine Verbindungsvorrichtung mit einer Schnappvorrichtung und drei Verbindungsvorrichtungen mit Gewinde vorgesehen. In einer anderen Vorrichtung mit sechs Verbindungsvorrichtungen sind sechs Verbindungsvorrichtungen mit Gewinde vorgesehen, wobei jeweils zwei Verbindungsvorrichtungen den gleichen Gewindetyp aufweisen. Die verschiedenen Ausgestaltungen der Verbindungsvorrichtungen sind entsprechend den Anforderungen kombinierbar.

Die mindestens eine Verbindungsvorrichtung ist erfindungsgemäß von der Oberseite der Verankerungsplatte zugänglich. Ist die Verbindungsvorrichtung als Gewinde ausgestaltet, ist auf der der Dachfläche abgewandten Seite eine Gewindeöffnung zugänglich. Entsprechend gilt dies für die anderen Ausführungsformen der Verbindungsvorrichtung. Auf diese Weise ist auf der dem Dach abgewandten Seite der Vorrichtung mindestens ein Objekt mit der Dachfläche verbindbar.

Ferner zeichnet sich die Vorrichtung in einer Ausgestaltung dadurch aus, dass die mindestens eine Verbindungsvorrichtung eine, insbesondere mechanische, Sollbruchstelle zum Lösen der Verbindung von der Verbindungsvorrichtung und dem Objekt aufweist. Vorzugsweise ist die Sollbruchstelle an dem dem Dach abgewandten Ende der Verbindungsvorrichtung angeordnet. Die Sollbruchstelle ist ausgebildet, bei Erfüllen einer vorbestimmten Belastungsbedingung, insbesondere einer vorbestimmten auf die Verbindungsvorrichtung wirkenden Kraft, sich zu öffnen oder abzureißen. Auf diese Weise wird die Verbindung von der Verbindungsvorrichtung und dem Objekt gelöst. Dadurch wird bei zu hohen Belastungen eine Beschädigung der Vorrichtung und/oder der Dachfläche vermieden. Mögliche Belastungsbedingungen sind das Überschreiten vorbestimmter Zuglastkräfte oder vorbestimmter Drucklastkräfte. In einer bevorzugten Ausgestaltung ist die Sollbruchstelle eine mechanische Sollbruchstelle, wobei diese als Verjüngung oder Verdünnung im Material oder eine Perforation im Material ausgebildet ist. Vorzugsweise ist in einer Ausführungsform die mechanische Sollbruchstelle als Feder ausgebildet.

In einer bevorzugten Ausgestaltung der Vorrichtung ist vorgesehen, dass die mindestens eine Verbindungsvorrichtung einen, insbesondere elektrisch oder elektronisch, steuerbaren Verschluss zur lösbaren Verbindung von der Verbindungsvorrichtung und dem Objekt aufweist, wobei insbesondere die Vorrichtung eine Verschlusskontrolleinheit zum Überwachen und/oder Steuern des steuerbaren Verschlusses aufweist. Mittels eines elektrisch oder elektronisch steuerbaren Verschlusses wird zum Beispiel die Verformung oder Zerstörung einer mechanischen Sollbruchstelle vermieden. Vorzugsweise wird der steuerbare Verschluss manuell oder automatisch angesteuert. In einer bevorzugten Ausgestaltung ist der steuerbare Verschluss eine elektrisch oder elektronisch lösbare Verrastung oder ist ein Magnetverschluss. Vorzugsweise ist der steuerbare Verschluss angepasst an die äußeren Bedingungen sowie die erwartbaren Lasten gewählt. Der steuerbare Verschluss ermöglicht eine lösbare Verbindung der Verbindungsvorrichtung und dem Objekt.

Vorzugsweise weist die Vorrichtung eine Verschlusskontrolleinheit zum Überwachen und/oder Steuern des steuerbaren Verschlusses auf. Von der Verschlusskontrolleinheit ist mindestens ein Steuersignal an den mindestens einen steuerbaren Verschluss sendbar. Dabei weist die Verschlusskontrolleinheit insbesondere mindestens einen Verschlusskontrollsensor auf, wobei mittels des mindestens einen Verschlusskontrollsensors Betriebsdaten, insbesondere Daten zur auf die Vorrichtung wirkende Zuglast oder zur auf die Vorrichtung wirkende Drucklast, messbar und mittels der Verschlusskontrolleinheit verarbeitbar sind. Vorzugsweise ist die Verschlusskontrolleinheit derart eingerichtet, dass in Abhängigkeit der Betriebsdaten, insbesondere bei Überschreiten einer vorbestimmten Zuglastschwelle und/ oder einer vorbestimmten Drucklastschwelle, mindestens ein Steuersignal zum Lösen des mindestens einen steuerbaren Verschlusses gesendet wird. Die Überwachung durch die Verschlusskontrolleinheit ermöglicht ein rechtzeitiges Lösen der Verbindung von der Verbindungsvorrichtung und dem Objekt, bevor eine zu hohe Last auf die Dachfläche und die Vorrichtung wirkt. Dadurch werden Beschädigungen an der Dachfläche und der Vorrichtung vermieden.

Bevorzugterweise weist die Verschlusskontrolleinheit eine Verschlusskontrollverarbeitungseinheit, die als Mikrocontroller ausgebildet ist, und mindestens einen Verschlusskontrollsensor, insbesondere einen Drucksensor und/oder weitere Sensoren auf. Die Daten dieser Sensoren werden von der Verschlusskontrollverarbeitungseinheit verarbeitet. Bevorzugterweise ist die Verschlusskontrolleinheit auf oder an der Verankerungsplatte oder an einem anderen Ort angeordnet. Die Ansteuerung des steuerbaren Verschlusses erfolgt in einer Ausführungsform über eine Kabelverbindung und in einer anderen Ausführungsform über eine Funkverbindung.

Ferner zeichnet sich die Vorrichtung dadurch aus, dass die Vorrichtung mindestens eine, insbesondere mechanische oder elektrische oder elektronische, Dachverankerungsüberwachungseinrichtung zum Überwachen der Positionierung der Verankerungsplatte auf der Dachfläche aufweist. Die Überwachung der Positionierung, einschließlich der Befestigung, der Verankerungsplatte auf der Dachfläche ermöglicht den sicheren Betrieb der Vorrichtung, indem bei regelmäßiger Überprüfung vor einem Schadensfall Instabilitäten identifiziert und behoben werden. In einer elektronischen Ausführungsform weist die Dachverankerungsüberwachungseinrichtung einen oder mehrere Sensoren auf, welche die Position der Vorrichtung und/oder Festigkeit der Verbindung von Vorrichtung und Dachfläche messen. In einer mechanischen Ausführungsform ist die Dachverankerungsüberwachungseinrichtung ein oder mehrere Metallstreifen, die zwischen Dachfläche und Verankerungsplatte angeordnet sind und bei fester Verbindung von Dachfläche und Verankerungsplatte ebenfalls fest positioniert sind und bei loser Verbindung von Dachfläche und Vorrichtung entfernt werden können. In einer weiteren Ausführungsform zeigt eine Dachverankerungsüberwachungseinrichtung die Güte der Anordnung bzw. die Stabilität der Verbindung über ein Farbsignal.

Ferner zeichnet sich die Vorrichtung dadurch aus, dass sie eine, insbesondere elektrisch betriebene, Heizvorrichtung aufweist, wobei insbesondere die Heizvorrichtung auf der Oberseite und/oder auf der Unterseite der Verankerungsplatte und/oder zwischen der Grundplatte und dem Deckschichtkörper flächig angeordnet ist. Die Heizvorrichtung ermöglicht es, die Vorrichtung aufzuheizen, insbesondere um Schnee und Eis zu schmelzen und bestimmte Betriebstemperaturen für die Verbindungsvorrichtungen, einen steuerbaren Verschluss, Sensoren und/oder Kontrolleinheiten zu gewährleisten. In einer bevorzugten Ausführungsform ist die Heizvorrichtung im Bereich der mindestens einen Verbindungsvorrichtung angeordnet und in einer bevorzugten Ausführungsform ist die Heizvorrichtung entfernt von der mindestens einen Verbindungsvorrichtung angeordnet. Vorzugsweise ist die Heizvorrichtung steuerbar oder regelbar ausgebildet. Vorzugsweise ist die Heizvorrichtung flächig, d.h. innerhalb der Fläche der Grundplatte oder des Deckschichtkörpers oder der Verankerungsplatte, angeordnet. In einer bevorzugten Ausführungsform weist die Heizvorrichtung Temperatursensoren auf.

Vorzugsweise zeichnet sich die Vorrichtung dadurch aus, dass sie eine mindestens einen Lastkontrollsensor aufweisende Lastkontrolleinheit zum Messen und/oder Verarbeiten und/oder Übertragen von Lastkontrollsensordaten aufweist. Lastkontrollsensordaten sind insbesondere Umgebungsdaten, wie meteorologische Parameter, beispielsweise Niederschlagsmenge, Niederschlagsart, Windrichtung, Windgeschwindigkeit, Lufttemperatur, Luftfeuchte, Luftdruck, Drucktendenz, Bewölkung und/oder Sichtweite, sowie technische Parameter der Vorrichtung, beispielsweise Zuglasten und/oder Drucklasten, die auf die Vorrichtung wirken. In einer bevorzugten Ausführungsform misst mindestens ein Lastkontrollsensor die aktuelle Windlast und/ oder die aktuelle Schneelast. Insbesondere misst mindestens ein Lastkontrollsensor die Drucklast auf die Verankerungsplatte. Die Verarbeitung und Überwachung der Lastkontrollsensordaten durch die Lastkontrolleinheit ermöglicht eine kontinuierliche Überwachung des Zustands der Vorrichtung. Werden durch die Lastkontrolleinheit kritische Werte von vorbestimmten Parametern festgestellt, wirkt die Lastkontrolleinheit vorzugsweise als Steuerungseinheit oder Regelungseinheit oder überträgt eine Statusmeldung, insbesondere an den Nutzer. Es ist vorteilhaft, dass die Lastkontrolleinheit als Steuerungseinheit oder Regelungseinheit für die Heizvorrichtung ausgebildet ist. Wird eine erhöhte Drucklast, insbesondere aufgrund von Schneelast, gemessen, steuert die Lastkontrolleinheit die Heizvorrichtung an, welche aktiviert wird, so dass Teile des Schnees schmelzen und die Dachlast verringert wird. Auf diese Weise wird die Stabilität und Integrität von Vorrichtung und Dachfläche gesichert.

In einer Ausführungsform weist die Lastkontrolleinheit mindestens einen Lastkontrollsensor und eine Lastkontrollverarbeitungseinheit, welche als Mikrocontroller ausgebildet ist, auf. Die Lastkontrollverarbeitungseinheit ist bevorzugterweise auf oder an der Verankerungsplatte angeordnet oder in einer anderen Ausführungsform an einem anderen Ort entfernt von der Verankerungsplatte. Der mindestens eine Lastkontrollsensor ist insbesondere auf der Unterseite der Verankerungsplatte oder insbesondere zwischen der Grundplatte und dem Deckschichtkörper oder insbesondere auf dem Deckschichtkörper angeordnet. In einer weiteren Ausführungsform besteht eine Lastkontrolleinheit aus mehreren Komponenten, insbesondere eine Komponente zur Verarbeitung von meteorologischen Umgebungsdaten und eine Komponente für die Verarbeitung von technischen Parametern einer Vorrichtung.

Insbesondere ist bei der Vorrichtung weiterhin vorgesehen, dass die Verankerungsplatte mit einer Wasserabflusseinrichtung ausgebildet ist, wobei insbesondere die Wasserabflusseinrichtung auf der Oberseite der Verankerungsplatte vorgesehen ist. Eine Wasserabflusseinrichtung sorgt für einen sicheren Betrieb der Vorrichtung und reduziert die Gefahr von Umwelteinflüssen wie Korrosion auf den Verbindungsvorrichtungen. Bevorzugt ist die Oberseite der Verankerungsplatte als strukturiertes Profil unterschiedlicher Plattendicken gestaltet, so dass auftreffendes Wasser, beispielsweise Wasser von Niederschlägen, von der Verankerungsplatte abgeleitet wird. In einer Ausführungsform ist die Wasserabflusseinrichtung als mindestens eine Nut oder Rinne ausgebildet, vorteilhafterweise mit einem schrägen Verlauf in der Verankerungsplatte, so dass Wasser zu der mindestens einen Nut oder Rinne geleitet wird, und vorteilhafterweise weist die mindestens eine Nut oder Rinne ebenfalls einen schrägen Verlauf auf, so dass aus der Nut oder Rinne das Wasser von der Vorrichtung abfließt.

Darüber hinaus ist vorzugsweise vorgesehen, dass die Vorrichtung mindestens eine Positionsmarkierung aufweist, wobei insbesondere die mindestens eine Positionsmarkierung als eine Einkerbung an einem Rand der Verankerungsplatte und/oder als eine Strukturierung der Oberseite der Verankerungsplatte und/oder als eine farbliche Kennzeichnung auf der Verankerungsplatte ausgebildet ist. Entsprechende Markierungen ermöglichen eine vereinfachte Positionierung und unterstützen eine effiziente und stabile Montage auf der Dachfläche. In einer Ausführungsform ist eine Positionsmarkierung als Einkerbung an einer und/oder mehreren Seiten ausgebildet, insbesondere in der Mitte einer Seite der Verankerungsplatte. In einer weiteren Ausführungsform sind die Ecken der Verankerungsplatte asymmetrisch ausgeführt, insbesondere angeschrägt. In einer weiteren Ausführungsform sind Teile der Verankerungsplatte farbig markiert und/oder mit Symbolen, Pfeilen oder anderen Kennzeichnungen markiert. In einer weiteren Ausführungsform weist die Verankerungsplatte eine haptische Markierung, insbesondere in der Oberflächenstruktur, insbesondere über Rauigkeit, auf. In einer weiteren Ausführungsform weist die Vorrichtung eine Markierung zur Unterscheidung von Ober- und Unterseite auf, insbesondere mittels eines Schriftzugs "oben" oder "unten" oder dergleichen.

Ferner wird die Aufgabe gelöst durch eine Anordnung von mindestens einer Vorrichtung gemäß einem der Ansprüche 1 bis 11 auf einer Dachfläche, insbesondere Flachdach, eines Gebäudes zum Befestigen von mindestens einem Objekt auf der Dachfläche, insbesondere Flachdach, des Gebäudes. Durch die Verbindung von Dachfläche und Deckschichtkörper wird insbesondere eine Befestigung der Vorrichtung einschließlich der Grundplatte an der Dachfläche bewirkt. Mittels einer Anordnung mehrerer Vorrichtungen wird eine hohe Flexibilität und Stabilität für die Positionierung von Objekten auf einer Dachfläche erreicht. Beispielsweise kann anstelle einer großen Vorrichtung bei der Montage eines großen Objekts kosteneffizient und ressourcenschonend auf eine Anordnung zweier kleiner Vorrichtungen zurückgegriffen werden. Vorzugsweise weist die Anordnung Vorrichtungen mit unterschiedlichen Verbindungsvorrichtungen und/oder einer unterschiedlichen Anordnung von Verbindungsvorrichtungen auf. In einer bevorzugten Ausführungsform sind die Heizvorrichtungen, die mindestens eine Verschlusskontrolleinheit, die mindestens eine Dachverankerungsüberwachungseinrichtung und/oder die mindestens eine Lastkontrolleinheit einschließlich ihrer Sensoren miteinander elektronisch verbunden, so dass eine effiziente Überwachung und Steuerung der Anordnung ermöglicht ist. Darüber hinaus wird die Aufgabe gelöst durch ein Verfahren zum Befestigen von mindestens einem Objekt an einer Dachfläche, insbesondere einem Flachdach, eines Gebäudes, wobei eine Vorrichtung gemäß einem der Ansprüche 1 bis 11 auf der Dachfläche angeordnet wird oder ist, wobei die Vorrichtung mit der Dachfläche mittels der Verbindungsmasse verbunden wird, wobei das mindestens eine Objekt auf der Dachfläche angeordnet wird oder ist und wobei das Objekt und die Vorrichtung mittels mindestens einer Verbindungsvorrichtung verbunden werden oder sind. Die Vorrichtung wird mit der Dachfläche mittels Bitumen oder mindestens einem bitumenhaltigen Bindemittel verbunden. In einer anderen nicht erfindungsgemäßen Ausführungsform werden die Vorrichtung und die Dachfläche mittels mindestens einem Flüssigkunststoff verbunden, oder verklebt oder verschweißt oder verschraubt. Nachdem die Vorrichtung auf der Dachfläche befestigt ist, wird das mindestens eine Objekt auf der Dachfläche angeordnet oder es ist angeordnet und anschließend mittels mindestens einer Verbindungsvorrichtung mit der Verankerungsplatte verbunden. Hierzu ist vorzugsweise das Objekt mit einem geeigneten Gegenstück zur Verbindungsvorrichtung eingerichtet, so dass Verankerungsplatte und Objekt mittels der Verbindungsvorrichtung fest und lösbar verbunden sind. Soll das befestigte Objekt durch ein anderes zu befestigendes Objekt ersetzt werden, wird die Verbindung der Verbindungsvorrichtung gelöst und das andere Objekt mit der Verbindungsvorrichtung befestigt.

Vorzugsweise zeichnet sich das Verfahren zum Befestigen von mindestens einem Objekt an einer Dachfläche in einem weiteren Aspekt dadurch aus, dass die Positionierung der Vorrichtung und/oder die Positionierung des Objekts auf der Dachfläche mittels eines Projektionssystems unterstützt wird. Ein Projektionssystem, insbesondere ein Lasersystem, welches Linien und/oder Punkte und/oder Gitter auf die Dachfläche projiziert, vereinfacht die Anordnung und Positionierung des Objekts auf der Dachfläche. Dies ermöglicht eine kosteneffiziente Montage.

Ferner wird die Aufgabe gelöst durch die Verwendung einer Vorrichtung nach einem der Ansprüche 1 bis 11 zum Befestigen von mindestens einem Objekt auf einer Dachfläche, insbesondere einem Flachdach, eines Gebäudes. Die Verwendung der Vorrichtung bedeutet insbesondere das Befestigthalten von mindestens einem Objekt an der Dachfläche. Darüber hinaus sieht vorzugsweise die Verwendung der Vorrichtung die Verwendung weiterer Merkmale, insbesondere einer Heizvorrichtung, einer Lastkontrolleinrichtung und/oder einer Verschlusskontrolleinrichtung vor. Durch die Verwendung einer erfindungsgemäßen Vorrichtung ist eine stabile und kostengünstige Befestigung von mindestens einem Objekt an einer Dachfläche ermöglicht.

Weitere Merkmale der Erfindung werden aus der Beschreibung erfindungsgemäßer Ausführungsformen zusammen mit den Ansprüchen und den beigefügten Zeichnungen ersichtlich. Erfindungsgemäße Ausführungsformen können einzelne Merkmale oder eine Kombination mehrerer Merkmale erfüllen.

Im Rahmen der Erfindung sind Merkmale, die mit "insbesondere" oder "vorzugsweise" gekennzeichnet sind, als fakultative Merkmale zu verstehen.

Die Erfindung wird nachstehend ohne Beschränkung des allgemeinen Erfindungsgedankens anhand von Ausführungsbeispielen unter Bezugnahme auf die Zeichnungen beschrieben, wobei bezüglich aller im Text nicht näher erläuterten erfindungsgemäßen Einzelheiten ausdrücklich auf die Zeichnungen verwiesen wird. Es zeigen:
- Fig. 1: eine schematische Draufsicht einer Vorrichtung in einer ersten Ausgestaltung,
- Fig. 2: eine schematische Querschnittsdarstellung der Vorrichtung aus Fig. 1,
- Fig. 3: eine schematische Querschnitt-Detailansicht einer Verbindungsvorrichtung im Ausschnitt,
- Fig. 4: eine schematische Querschnitt-Detailansicht einer Verbindungsvorrichtung mit einer Sollbruchstelle und einem Lastkontrollsensor im Ausschnitt,
- Fig. 5: eine schematische, perspektivische Darstellung einer Vorrichtung gemäß einer weiteren Ausgestaltung und
- Fig. 6: eine schematische Darstellung der Verarbeitung der Sensordaten mittels einer Lastkontrolleinheit und einer Verschlusskontrolleinheit.

In den Zeichnungen sind jeweils gleiche oder gleichartige Elemente und/oder Teile mit denselben Bezugsziffern versehen, so dass von einer erneuten Vorstellung jeweils abgesehen wird.

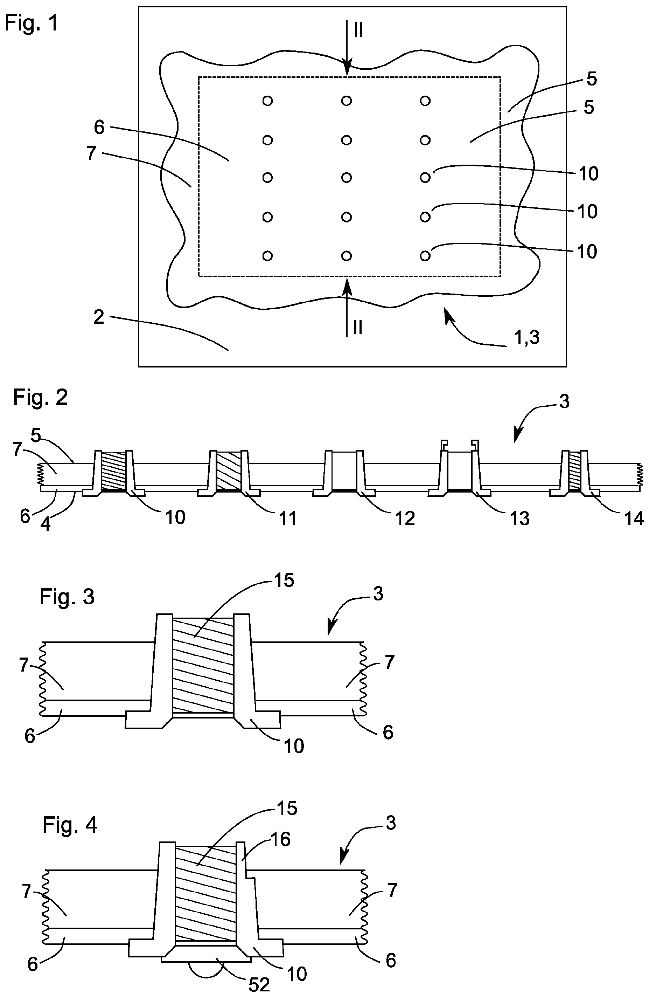

Fig. 2 zeigt schematisch einen Querschnitt durch die Verankerungsplatte 3 entlang der mit II bezeichneten Achse in Fig. 1.

Fig. 1 zeigt schematisch eine Draufsicht einer erfindungsgemäßen Vorrichtung 1 zum Befestigen von mindestens einem Objekt an einer Dachfläche 2. Die Vorrichtung 1 weist eine Verankerungsplatte 3 und eine Oberseite 5 der Verankerungsplatte 3 auf. Die Verankerungsplatte 3 umfasst ferner einen Deckschichtkörper 7 und eine Grundplatte 6 (vgl. Fig. 2). Der Deckschichtkörper 7 ist aus Bitumen gegossen und mittels des Deckschichtkörpers 7 ist die Vorrichtung 1 mit der Dachfläche 2 verbunden. Die Grundplatte 6 befindet sich zwischen dem Deckschichtkörper 7 und der Dachfläche 2 und ist daher gestrichelt dargestellt. Mehrere Verbindungsvorrichtungen 10 sind regelmäßig auf der Verankerungsplatte 3 angeordnet. An jedem der Verbindungsvorrichtungen 10 ist ein auf dem Dach anzuordnendes Objekt mit der Verankerungsplatte 3 verbindbar. In anderen, nicht dargestellten Ausführungsformen sind die Verbindungsvorrichtungen 10 in einer anderen, unregelmäßigen Anordnung auf der Verankerungsplatte 3 angeordnet.

Die Verankerungsplatte 3 weist eine Unterseite 4 und eine Oberseite 5 auf (vgl. Fig. 2). In der dargestellten Ausführungsform besteht die Verankerungsplatte 3 aus einer Grundplatte 6 und einem Deckschichtkörper 7. In anderen, nicht dargestellten Ausführungsformen weist die Verankerungsplatte 3 weitere Platten oder Schichtkörper oberhalb des Deckschichtkörpers 7 und/oder unterhalb der Grundplatte 6 auf.

Die Verankerungsplatte 3 weist im dargestellten Querschnitt beispielhaft fünf Verbindungsvorrichtungen 10, 11, 12, 13, 14 auf. In der dargestellten Ausführungsform sind die Verbindungsvorrichtungen 10, 11, 12, 13, 14 unterschiedlich ausgeführt. Während die Verbindungsvorrichtungen 10 und 14 beide als Gewinde ausgebildet sind, unterscheiden sie sich in ihrem Durchmesser. Die Verbindungsvorrichtung 13 ist als Schnappvorrichtung ausgebildet. In anderen, gleichermaßen bevorzugten, Ausführungsformen sind die Verbindungsvorrichtungen 10, 11, 12, 13, 14 in anderer Weise unterschiedlich, beispielsweise einige mit Gewinde und andere mit Rastvorrichtungen, versehen. In anderen bevorzugten Ausführungsformen sind die Verbindungsvorrichtungen 10, 11, 12, 13, 14 identisch ausgeführt. Die Verbindungsvorrichtungen 10, 11, 12, 13, 14 sind fest mit der Grundplatte 6 verbunden und durchdringen den Deckschichtkörper 7, so dass die Verbindungsvorrichtungen 10, 11, 12, 13, 14 von der Oberseite der Verankerungsplatte 5 zugänglich sind. Hierdurch sind einerseits die Verbindungsvorrichtungen 10, 11, 12, 13, 14 fest mit der Verankerungsplatte 3 verbunden und andererseits ist ein Zugang zur Befestigung von Objekten sichergestellt.

In Fig. 3 ist eine Detailansicht von Fig. 2 mit einer Verbindungsvorrichtung 10 im Ausschnitt dargestellt. Die Verbindungsvorrichtung 10 ist als ein Gewinde 15 ausgeführt. In dieser Ausführungsform ist die Verbindungsvorrichtung 10 eine Gewindemuffe mit Innengewinde, wobei die Gewindemuffe mit der Grundplatte 6 verschweißt ist.

In Fig. 4 ist eine weitere Verbindungsvorrichtung 10 im Ausschnitt dargestellt, wobei gegenüber der Darstellung in Fig. 3 die Verbindungsvorrichtung 10 zusätzlich mit einer mechanischen Sollbruchstelle 16 versehen ist. Die Sollbruchstelle 16 ist am oberen, am der Dachfläche abgewandten, Ende der Verbindungsvorrichtung 10, angeordnet. Weiterhin weist die dargestellte Verbindungsvorrichtung 10 auf der der Dachfläche zugewandten Seite der Grundplatte einen Lastkontrollsensor 52 auf. Dieser ist ausgebildet, die Drucklast, die auf die Verankerungsplatte wirkt, zu bestimmen und an eine Lastkontrollverarbeitungseinheit 54 (nicht abgebildet) zu übermitteln.

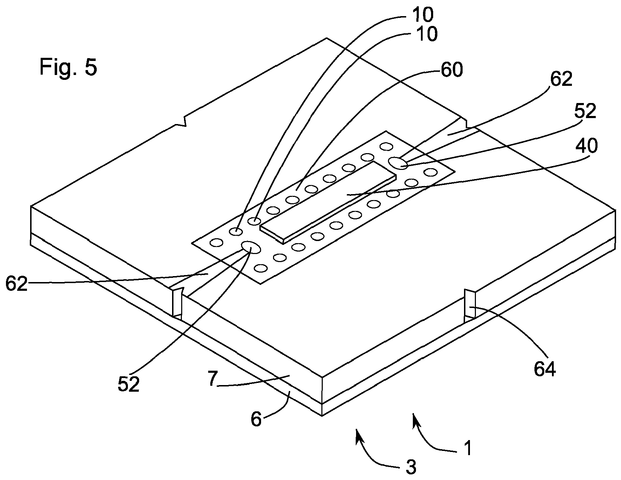

Fig. 5 zeigt schematisch eine perspektivische Ansicht einer Vorrichtung 1 zum Befestigen von mindestens einem Objekt an einer Dachfläche, wobei auf der Verankerungsplatte 3 mittig ein Zentralbauteil 60 angeordnet ist, welches mehrere Verbindungsvorrichtungen 10 aufweist. Zudem ist mittig auf der Verankerungsplatte 3 eine Heizvorrichtung 40 angeordnet. Weiterhin sind im Zentralbauteil 60 zwei Lastkontrollsensoren 52 angeordnet, welche mit einer nicht dargestellten Lastkontrollverarbeitungseinheit 54 verbunden sind. Zudem zeigt Fig. 5 zwei Wasserabflusseinrichtungen 62, welche Wasser, welches auf die Verankerungsplatte, insbesondere das Zentralbauteil, fällt, über die Wasserabflusseinrichtung von der Verankerungsplatte leitet. An den Seiten der Vorrichtung sind Einkerbungen 64 dargestellt, die als Positionsmarkierung eine vereinfachte Montage ermöglichen. Dieses dargestellte Ausführungsbeispiel stellt nur eine Ausführungsform dar; erfindungsgemäß sind weitere Anordnungen der Komponenten, insbesondere der Verbindungsvorrichtungen, einer Heizvorrichtung oder Lastkontrollsensoren möglich.

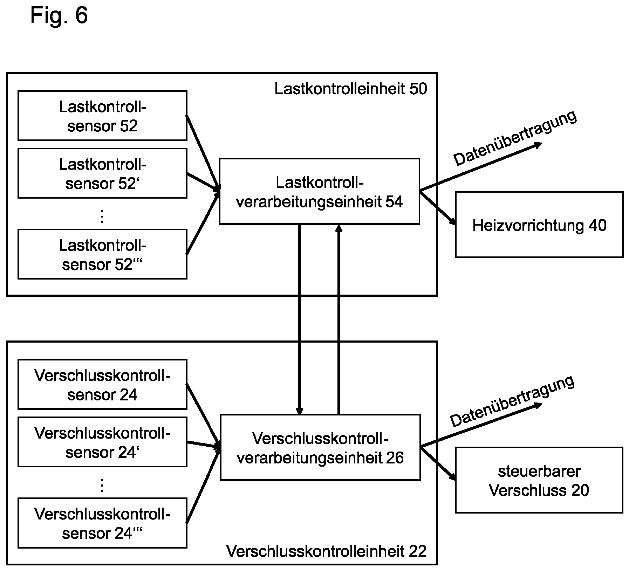

In Fig. 6 ist schematisch die Informationsverarbeitung der Sensordaten, insbesondere der Lastkontrollsensoren 52 und der Verschlusskontrollsensoren 24, dargestellt. Diese Sensoren sind Teil der Lastkontrolleinheit 50 bzw. Verschlusskontrolleinheit 22 und stellen Messdaten, insbesondere technische Parameter der Vorrichtung oder einzelner Verbindungsvorrichtungen sowie meteorologische Parameter oder Umgebungsparameter, zur Verfügung. Im dargestellten Ausführungsbeispiel verarbeitet die Lastkontrollverarbeitungseinheit 54 die Sensordaten und steuert oder regelt in Abhängigkeit davon die Heizvorrichtung 40. Weiterhin sind von der Lastkontrolleinheit 50 die Daten übertragbar, beispielsweise an andere informationstechnologische Systeme oder einen Nutzer.

Die Verschlusskontrolleinheit 22 verarbeitet die Daten der Verschlusskontrollsensoren 24 und steuert den steuerbaren Verschluss 20 mittels der Verschlusskontrollverarbeitungseinheit 26. In dieser Ausführungsform sind Informationssignale oder Steuersignale zwischen der Lastkontrolleinheit 50 und der Verschlusskontrolleinheit 22 bzw. zwischen der Lastkontrollverarbeitungseinheit 54 und der Verschlusskontrollverarbeitungseinheit 26 sendbar.

In einer weiteren, nicht dargestellten Ausführungsform ist eine einzige Kontrolleinheit als Lastkontrolleinheit 50 und als Verschlusskontrolleinheit 22 ausgebildet. In einer weiteren Ausführungsform verarbeiten eine Lastkontrolleinheit 50 und eine Verschlusskontrolleinheit 22 die Sensordaten verschiedener Lastkontrollsensoren 52 und Verschlusskontrollsensoren 24 von unterschiedlichen Verbindungsvorrichtungen 10 und verschiedenen Vorrichtungen 1, so dass die Überwachung und/oder Steuerung und/oder Regelung der Vorrichtungen 1 zum Befestigen von mindestens einem Objekt an einer Dachfläche effizient ausgeführt wird.

Alle genannten Merkmale, auch die den Zeichnungen allein zu entnehmenden sowie auch einzelne Merkmale, die in Kombination mit anderen Merkmalen offenbart sind, werden allein und in Kombination als erfindungswesentlich angesehen, solange sie in den durch die beigefügten Ansprüche definierten Umfang fallen. Erfindungsgemäße Ausführungsformen können durch einzelne Merkmale oder eine Kombination mehrerer Merkmale erfüllt sein, ohne von dem durch die beigefügten Ansprüche definierten Umfang abzuweichen.

### Bezugszeichenliste

- 1: Vorrichtung zum Befestigen von mindestens einem Objekt
- 2: Dachfläche
- 3: Verankerungsplatte
- 4: Unterseite der Verankerungsplatte
- 5: Oberseite der Verankerungsplatte
- 6: Grundplatte
- 7: Deckschichtkörper
- 10, 11, 12, 13, 14: Verbindungsvorrichtung
- 15: Gewinde
- 16: Sollbruchstelle
- 20: steuerbarer Verschluss
- 22: Verschlusskontrolleinheit
- 24: Verschlusskontrollsensor
- 26: Verschlusskontrollverarbeitungseinheit
- 30: Dachverankerungsüberwachungseinrichtung
- 40: Heizvorrichtung
- 50: Lastkontrolleinheit
- 52: Lastkontrollsensor
- 54: Lastkontrollverarbeitungseinheit
- 60: Zentralbauteil
- 62: Wasserabflusseinrichtung
- 64: Einkerbung

## Patentansprüche

1. Vorrichtung (1) zum Befestigen von mindestens einem Objekt auf einer Dachfläche, insbesondere einem Flachdach, eines Gebäudes, wobei die Vorrichtung (1) eine Verankerungsplatte (3) aufweist, wobei die Verankerungsplatte (3) auf der Dachfläche angeordnet oder anordbar ist, wobei die Verankerungsplatte (3) eine der Dachfläche zugewandte Unterseite (4) und eine der Dachfläche abgewandte Oberseite (5) aufweist, wobei die Unterseite (4) der Verankerungsplatte (3) als Kontaktfläche zur Dachfläche ausgebildet ist, und wobei die Verankerungsplatte (3) eine Grundplatte (6) und einen auf der der Dachfläche abgewandten Seite der Grundplatte (6) angeordneten Deckschichtkörper (7) aufweist, wobei die Grundplatte (6) eine höhere Steifigkeit als der Deckschichtkörper (7) aufweist, und wobei die Verankerungsplatte (3) mindestens eine Verbindungsvorrichtung (10, 11, 12, 13, 14) für das auf der Dachfläche zu befestigende oder befestigte Objekt aufweist, wobei die mindestens eine Verbindungsvorrichtung (10, 11, 12, 13, 14) mit der Grundplatte (6) verbunden ist und der Deckschichtkörper (7) von der mindestens einen Verbindungsvorrichtung (10, 11, 12, 13, 14) durchdrungen ist und die mindestens eine Verbindungsvorrichtung (10, 11, 12, 13, 14) von der Oberseite (5) der Verankerungsplatte (3) zugänglich ist, wobei die Grundplatte (6) zur Verbindung mit der oberseitigen Dachfläche mit einer Masse, wie z.B. Bitumen, vergossen ist, wodurch der Deckschichtkörper (7) der Verankerungsplatte (3) aus der gegossenen Masse ausgebildet ist.

2. Vorrichtung (1) nach Anspruch 1, **dadurch gekennzeichnet, dass** die Grundplatte (6) aus Metall, insbesondere Stahl, insbesondere Edelstahl, besteht und/oder eine Dicke von 0.5 bis 5 mm, insbesondere von 1 bis 3 mm, aufweist.

3. Vorrichtung (1) nach Anspruch 1 oder 2, **dadurch gekennzeichnet, dass** der Deckschichtkörper (7) aus Bitumen und/oder eine Dicke von 1 bis 10 mm, insbesondere von 3 bis 8 mm, insbesondere von 4 bis 6 mm, aufweist.

4. Vorrichtung (1) nach einem der Ansprüche 1 bis 3, **dadurch gekennzeichnet, dass** die mindestens eine Verbindungsvorrichtung (10, 11, 12, 13, 14) als ein Gewinde (15), insbesondere als ein Gewindebolzen mit Außengewinde oder als eine Gewindemuffe mit Innengewinde, oder eine Stiftverbindungsvorrichtung oder eine Rastvorrichtung oder eine Schnappvorrichtung oder ein Verbindungsbeschlag oder ein Haken ausgebildet ist.

5. Vorrichtung (1) nach einem der Ansprüche 1 bis 4, **dadurch gekennzeichnet, dass** die mindestens eine Verbindungsvorrichtung (10, 11, 12, 13, 14) eine, insbesondere mechanische, Sollbruchstelle (16) zum Lösen der Verbindung von der Verbindungsvorrichtung (10, 11, 12, 13, 14) und dem Objekt aufweist.

6. Vorrichtung (1) nach einem der Ansprüche 1 bis 5, **dadurch gekennzeichnet, dass** die mindestens eine Verbindungsvorrichtung (10, 11, 12, 13, 14) einen, insbesondere elektrisch oder elektronisch, steuerbaren Verschluss (20) zur lösbaren Verbindung von der Verbindungsvorrichtung (10, 11, 12, 13, 14) und dem Objekt aufweist, wobei insbesondere die Vorrichtung (1) eine Verschlusskontrolleinheit (22) zum Überwachen und/oder Steuern des steuerbaren Verschlusses (20) aufweist.

7. Vorrichtung (1) nach einem der Ansprüche 1 bis 6, **dadurch gekennzeichnet, dass** die Vorrichtung (1) mindestens eine, insbesondere mechanische oder elektrische oder elektronische, Dachverankerungsüberwachungseinrichtung (30) zum Überwachen der Positionierung der Verankerungsplatte (3) auf der Dachfläche aufweist.

8. Vorrichtung (1) nach einem der Ansprüche 1 bis 7, **dadurch gekennzeichnet, dass** die Vorrichtung (1) eine, insbesondere elektrisch betriebene, Heizvorrichtung (40) aufweist, wobei insbesondere die Heizvorrichtung (40) auf der Oberseite (5) und/oder auf der Unterseite (4) der Verankerungsplatte (3) und/oder zwischen der Grundplatte (6) und dem Deckschichtkörper (7) flächig angeordnet ist.

9. Vorrichtung (1) nach einem der Ansprüche 1 bis 8, **dadurch gekennzeichnet, dass** die Vorrichtung (1) eine mindestens einen Lastkontrollsensor (52) aufweisende Lastkontrolleinheit (50) zum Messen und/oder Verarbeiten und/oder Übertragen von Lastkontrollsensordaten aufweist, wobei insbesondere mittels des mindestens einen Lastkontrollsensors (52) die Drucklast auf die Verankerungsplatte (3) und/oder meteorologische Parameter messbar sind.

10. Vorrichtung (1) nach einem der Ansprüche 1 bis 9, **dadurch gekennzeichnet, dass** die Verankerungsplatte (3) mit einer Wasserabflusseinrichtung (62) ausgebildet ist, wobei insbesondere die Wasserabflusseinrichtung (62) auf der Oberseite (5) der Verankerungsplatte (3) vorgesehen ist.

11. Vorrichtung (1) nach einem der Ansprüche 1 bis 10, **dadurch gekennzeichnet, dass** die Vorrichtung mindestens eine Positionsmarkierung aufweist, wobei insbesondere die mindestens eine Positionsmarkierung als eine Einkerbung (64) an einem Rand der Verankerungsplatte (3) und/oder als eine Strukturierung der Oberseite (5) der Verankerungsplatte (3) und/oder als eine farbliche Kennzeichnung auf der Verankerungsplatte (3) ausgebildet ist.

12. Anordnung von mindestens einer Vorrichtung (1) gemäß einem der Ansprüche 1 bis 11 auf einer Dachfläche, insbesondere Flachdach, eines Gebäudes zum Befestigen von mindestens einem Objekt auf der Dachfläche, insbesondere Flachdach, des Gebäudes.

13. Verfahren zum Befestigen von mindestens einem Objekt an einer Dachfläche, insbesondere einem Flachdach, eines Gebäudes, wobei eine Vorrichtung (1) gemäß einem der Ansprüche 1 bis 11 auf der Dachfläche angeordnet wird oder ist, wobei die Vorrichtung (1) mittels der Verbindungsmasse mit der Dachfläche verbunden wird, wobei das mindestens eine Objekt auf der Dachfläche angeordnet wird oder ist und wobei das Objekt und die Vorrichtung (1) mittels mindestens einer Verbindungsvorrichtung (10, 11, 12, 13, 14) verbunden werden oder sind.

14. Verfahren nach Anspruch 13, **dadurch gekennzeichnet, dass** die Positionierung der Vorrichtung (1) und/oder die Positionierung des Objekts auf der Dachfläche mittels eines Projektionssystems unterstützt wird.

15. Verwendung einer Vorrichtung (1) nach einem der Ansprüche 1 bis 11 zum Befestigen von mindestens einem Objekt auf einer Dachfläche, insbesondere einem Flachdach, eines Gebäudes.

## Claims

1. A device (1) for fixing at least one object on a roof surface, in particular a flat roof, of a building, wherein the device (1) has an anchoring plate (3), wherein the anchoring plate (3) is arranged or arrangeable on the roof surface, wherein the anchoring plate (3) has an underside (4) facing the roof surface and an upper side (5) facing away from the roof surface, wherein the underside (4) of the anchoring plate (3) is designed as a contact surface to the roof surface, and wherein the anchoring plate (3) has a base plate (6) and a cover layer body (7) arranged on the side of the base plate (6) that faces away from the roof surface, wherein the base plate (6) has a higher rigidity than the cover layer body (7), and wherein the anchoring plate (3) has at least one connecting device (10, 11, 12, 13, 14) for the object fixed or to be fixed on the roof surface, wherein the at least one connecting device (10, 11, 12, 13, 14) is connected to the base plate (6) and the at least one connecting device (10, 11, 12, 13, 14) passes through the cover layer body (7) and the at least one connecting device (10, 11, 12, 13, 14) is accessible from the upper side (5) of the anchoring plate (3), wherein the base plate (6) is cast with a mass, such as bitumen, in order to be connected to the upper side of the roof surface, as a result of which the cover layer body (7) of the anchoring plate (3) is formed from the cast mass.

2. The device (1) according to claim 1, **characterized in that** the base plate (6) consists of metal, in particular steel, in particular stainless steel, and/or has a thickness of 0.5 to 5 mm, in particular 1 to 3 mm.

3. The device (1) according to claim 1 or 2, **characterized in that** the cover layer body (7) consists of bitumen and/or has a thickness of 1 to 10 mm, in particular 3 to 8 mm, in particular 4 to 6 mm.

4. The device (1) according to one of claims 1 to 3, **characterized in that** the at least one connecting device (10, 11, 12, 13, 14) is formed as a thread (15), in particular as a threaded bolt with an outer thread or as a threaded socket with an inner thread, or a pin connection device or a latching device or a snap device or a connecting fitting or a hook.

5. The device (1) according to one of claims 1 to 4, **characterized in that** the at least one connecting device (10, 11, 12, 13, 14) has an, in particular mechanical, predetermined breaking point (16) for releasing the connection of the connecting device (10, 11, 12, 13, 14) and the object.

6. The device (1) according to one of claims 1 to 5, **characterized in that** the at least one connecting device (10, 11, 12, 13, 14) has an, in particular electrically or electronically, controllable closure (20) for releasably connecting the connecting device (10, 11, 12, 13, 14) and the object, wherein in particular the device (1) has a closure control unit (22) for monitoring and/or controlling the controllable closure (20).

7. The device (1) according to one of claims 1 to 6, **characterized in that** the device (1) has at least one, in particular mechanical or electrical or electronic, roof anchor monitoring device (30) for monitoring the positioning of the anchoring plate (3) on the roof surface.

8. The device (1) according to one of claims 1 to 7, **characterized in that** the device (1) has an, in particular electrically operated, heating device (40), wherein in particular the heating device (40) is arranged flat on the upper side (5) and/or on the underside (4) of the anchoring plate (3) and/or between the base plate (6) and the cover layer body (7).

9. The device (1) according to one of claims 1 to 8, **characterized in that** the device (1) has a load control unit (50), having at least one load control sensor (52), for measuring and/or processing and/or transmitting load control sensor data, wherein the pressure load on the anchoring plate (3) and/or meteorological parameters are measurable in particular by means of the at least one load control sensor (52).

10. The device (1) according to one of claims 1 to 9, **characterized in that** the anchoring plate (3) is formed with a water drain device (62), wherein in particular the water drain device (62) is provided on the upper side (5) of the anchoring plate (3).

11. The device (1) according to one of claims 1 to 10, **characterized in that** the device has at least one position marking, wherein in particular the at least one position marking is formed as a notch (64) at an edge of the anchoring plate (3) and/or as a structuring of the upper side (5) of the anchoring plate (3) and/or as a colored mark on the anchoring plate (3).

12. An arrangement of at least one device (1) according to one of claims 1 to 11 on a roof surface, in particular a flat roof, of a building for fixing at least one object on the roof surface, in particular the flat roof, of the building.

13. A method for fixing at least one object on a roof surface, in particular a flat roof, of a building, wherein a device (1) according to one of claims 1 to 11 is arranged on the roof surface, wherein the device (1) is connected to the roof surface by means of the connecting mass, wherein the at least one object is arranged on the roof surface and wherein the object and the device (1) are connected by means of at least one connecting device (10, 11, 12, 13, 14).

14. The method according to claim 13, **characterized in that** the positioning of the device (1) and/or the positioning of the object on the roof surface is facilitated by means of a projection system.

15. Use of a device (1) according to one of claims 1 to 11 for fixing at least one object on a roof surface, in particular a flat roof, of a building.

## Revendications

1. Dispositif (1) de fixation d'au moins un objet sur une surface de toit, en particulier un toit plat, d'un bâtiment, le dispositif (1) comprenant une plaque d'ancrage (3), la plaque d'ancrage (3) étant agencée ou apte à être agencée sur la surface de toit, la plaque d'ancrage (3) présentant une face inférieure (4) tournée vers la surface de toit et une face supérieure (5) opposée à la surface de toit, la face inférieure (4) de la plaque d'ancrage (3) étant conçue en tant que surface de contact avec la surface de toit, et la plaque d'ancrage (3) comprenant une plaque de base (6) et un corps (7) de couche de recouvrement agencé sur le côté de la plaque de base (6) opposé à la surface de toit, la plaque de base (6) présentant une rigidité supérieure à celle du corps (7) de couche de recouvrement, et la plaque d'ancrage (3) comprenant au moins un dispositif de liaison (10, 11, 12, 13, 14) pour l'objet à fixer ou fixé sur la surface de toit, ledit au moins un dispositif de liaison (10, 11, 12, 13, 14) étant relié à la plaque de base (6) et le corps (7) de couche de recouvrement étant traversé par ledit au moins un dispositif de liaison (10, 11, 12, 13, 14) et ledit au moins un dispositif de liaison (10, 11, 12, 13, 14) étant accessible depuis la face supérieure (5) de la plaque d'ancrage (3), la plaque de base (6) étant coulée avec une masse, telle que du bitume par exemple, pour la relier à la surface supérieure du toit, le corps (7) de couche de recouvrement de la plaque d'ancrage (3) étant ainsi formé à partir de la masse coulée.

2. Dispositif (1) selon la revendication 1, **caractérisé en ce que** la plaque de base (6) est en métal, en particulier en acier, en particulier en acier inoxydable, et/ou présente une épaisseur allant de 0,5 à 5 mm, en particulier de 1 à 3 mm.

3. Dispositif (1) selon la revendication 1 ou la revendication 2, **caractérisé en ce que** le corps de couche de recouvrement (7) est constitué de bitume et/ou présente une épaisseur comprise entre 1 et 10 mm, en particulier entre 3 et 8 mm, en particulier comprise entre 4 et 6 mm.

4. Dispositif (1) selon l'une des revendications 1 à 3, **caractérisé en ce que** ledit au moins un dispositif de liaison (10, 11, 12, 13, 14) est conçu sous la forme d'un filetage (15), en particulier d'un boulon fileté avec filetage extérieur ou d'un manchon fileté avec filetage intérieur, ou d'un dispositif de liaison à goupille ou d'un dispositif d'encliquetage, ou d'un dispositif à enclenchement ou d'une ferrure de liaison ou d'un crochet.

5. Dispositif (1) selon l'une des revendications 1 à 4, **caractérisé en ce que** ledit au moins un dispositif de liaison (10, 11, 12, 13, 14) comprend un point de rupture prédéterminé (16), en particulier mécanique, pour détacher la liaison entre le dispositif de liaison (10, 11, 12, 13, 14) et l'objet.

6. Dispositif (1) selon l'une des revendications 1 à 5, **caractérisé en ce que** ledit au moins un dispositif de liaison (10, 11, 12, 13, 14) comprend un mécanisme de verrouillage (20) apte à être commandé, notamment électrique ou électronique, pour une liaison libérable entre le dispositif de liaison (10, 11, 12, 13, 14) et l'objet, le dispositif (1) comprenant en particulier une unité (22) de commande de verrouillage pour la surveillance et/ou la commande du mécanisme de verrouillage (20).

7. Dispositif (1) selon l'une des revendications 1 à 6, **caractérisé en ce que** le dispositif (1) comprend au moins un dispositif (30) de surveillance d'ancrage de toit, en particulier mécanique, électrique ou électronique, pour surveiller le positionnement de la plaque d'ancrage (3) sur la surface de toit.

8. Dispositif (1) selon l'une des revendications 1 à 7, **caractérisé en ce que** le dispositif (1) comprend un dispositif de chauffage (40), en particulier électrique, le dispositif de chauffage (40) étant agencé à plat en particulier sur la face supérieure (5) et/ou sur la face inférieure (4) de la plaque d'ancrage (3) et/ou entre la plaque de base (6) et le corps (7) de couche de recouvrement.

9. Dispositif (1) selon l'une des revendications 1 à 8, **caractérisé en ce que** le dispositif (1) comprend une unité (50) de contrôle de charge comprenant au moins un capteur (52) de contrôle de charge pour mesurer et/ou traiter et/ou transmettre des données du capteur de contrôle de charge, la charge de pression sur la plaque d'ancrage (3) et/ou des paramètres météorologiques aptes à être mesurés en particulier au moyen dudit au moins un capteur (52) de contrôle de charge.

10. Dispositif (1) selon l'une des revendications 1 à 9, **caractérisé en ce que** la plaque d'ancrage (3) est équipée d'un dispositif (62) de drainage d'eau, le dispositif (62) de drainage d'eau étant notamment prévu sur la face supérieure (5) de la plaque d'ancrage (3).

11. Dispositif (1) selon l'une des revendications 1 à 10, **caractérisé en ce que** le dispositif comprend au moins un repère de position, ledit au moins un repère de position étant notamment réalisé sous la forme d'une encoche (64) sur un bord de la plaque d'ancrage (3) et/ou sous la forme d'une structuration de la face supérieure (5) de la plaque d'ancrage (3) et/ou sous la forme d'un marquage coloré sur la plaque d'ancrage (3).

12. Disposition d'au moins un dispositif (1) selon l'une des revendications 1 à 11 sur une surface de toit, en particulier un toit plat, d'un bâtiment, de fixation d'au moins un objet sur la surface de toit, en particulier un toit plat, du bâtiment.

13. Procédé de fixation d'au moins un objet sur une surface de toit, en particulier un toit plat, d'un bâtiment, dans lequel un dispositif (1) selon l'une des revendications 1 à 11 est agencé ou apte à être agencé sur la surface de toit, le dispositif (1) étant relié à la surface de toiture au moyen de la masse de liaison, ledit au moins un objet étant agencé ou apte à être agencé sur la surface de toit, et l'objet et le dispositif (1) étant reliés au moyen d'au moins un dispositif de liaison (10, 11, 12, 13, 14).

14. Procédé selon la revendication 13, **caractérisé en ce que** le positionnement du dispositif (1) et/ou le positionnement de l'objet sur la surface de toit est assisté au moyen d'un système de projection.

15. Utilisation d'un dispositif (1) selon l'une des revendications 1 à 11 de fixation d'au moins un objet sur une surface de toit, en particulier un toit plat, d'un bâtiment.
